(19) Europäisches Patentamt
European Patent Office
Office européen des brevets

(11) **EP 2 749 471 B1**

(12) **FASCICULE DE BREVET EUROPEEN**

(45) Date de publication et mention
de la délivrance du brevet:
**02.12.2015 Bulletin 2015/49**

(51) Int Cl.:
***B61L 25/02*** *(2006.01)*        ***G01P 3/44*** *(2006.01)*

(21) Numéro de dépôt: **13199670.4**

(22) Date de dépôt: **27.12.2013**

(54) **PROCÉDÉ D'ÉVALUATION DE LA VITESSE D'UN VÉHICULE FERROVIAIRE**

VERFAHREN ZUR GESCHWINDIGKEITSBESTIMMUNG EINES SCHIENENFAHRZEUGS

METHOD FOR ASSESSING THE SPEED OF A RAILWAY VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.12.2012 FR 1262838**

(43) Date de publication de la demande:
**02.07.2014 Bulletin 2014/27**

(73) Titulaire: **ALSTOM Transport Technologies
92300 Levallois-Perret (FR)**

(72) Inventeur: **Le Bastard, Jean
78000 VERSAILLES (FR)**

(74) Mandataire: **Blot, Philippe Robert Emile
Cabinet Lavoix
2, place d'Estienne d'Orves
75441 Paris Cedex 09 (FR)**

(56) Documents cités:
**EP-A1- 1 705 095        WO-A1-2009/074724
WO-A1-2012/010809    US-A1- 2005 137 761**

**Description**

La présente invention concerne un procédé d'évaluation de la vitesse angulaire d'un véhicule ferroviaire circulant sur une voie du type comportant une centrale inertielle comportant au moins un capteur de vitesse angulaire, le procédé comportant une étape de mesure d'une vitesse angulaire instantanée fournie par le capteur, caractérisé en ce qu'il comporte :

-     une étape de détermination du biais de la vitesse angulaire mesurée autour d'au moins un axe, le biais de vitesse étant pris égal à la valeur de la vitesse angulaire mesurée autour de cet axe lorsque ladite vitesse angulaire mesurée est sensiblement constante pendant une durée prédéterminée ; et
-     une étape de calcul de la vitesse angulaire évaluée, par soustraction, à la vitesse angulaire mesurée, du biais de vitesse précédemment déterminé.

Afin de déterminer leur vitesse et la distance parcourue sur la voie, les véhicules ferroviaires sont équipés de capteurs de roue, permettant de mesurer la rotation d'une ou de plusieurs roues du véhicule.

Les mesures effectuées à partir des capteurs de roue sont souvent inexploitables ou imprécises, du fait du glissement de la roue par rapport au rail. Ce glissement se produit soit lors des phases d'accélération du véhicule soit lors des phases de freinage.

Il a été envisagé d'effectuer des mesures d'accélération, de vitesse et de position à partir d'une centrale inertielle, mais les informations fournies par les centrales inertielles équipant les véhicules sont également entachées d'erreurs qui résultent d'imprécisions ou biais liés à la technologie utilisée.

Le document EP 1 705 095 A1 divulgue un système avec une centrale inertielle.

En pratique, pour réduire les coûts de fabrication, ces centrales inertielles mettent couramment en oeuvre des technologies MEMS qui délivrent par construction des valeurs présentant un biais.

L'invention a pour but de proposer un procédé et une installation qui permettent de fournir une information fiable sur la distance parcourue ou la vitesse d'un véhicule ferroviaire, à partir d'informations issues notamment d'une centrale inertielle.

A cet effet, l'invention a pour objet un procédé d'évaluation de la vitesse angulaire d'un véhicule ferroviaire circulant sur une voie du type précité, caractérisé en ce qu'il comporte :

-     une étape de détermination du biais de la vitesse angulaire mesurée autour d'au moins un axe, le biais de vitesse étant pris égal à la valeur de la vitesse angulaire mesurée autour de cet axe lorsque ladite vitesse angulaire mesurée est sensiblement constante pendant une durée prédéterminée ; et
-     une étape de calcul de la vitesse angulaire évaluée, par soustraction, à la vitesse angulaire mesurée, du biais de vitesse précédemment déterminé.

Suivant des modes particuliers de mise en oeuvre, le procédé comporte l'une ou plusieurs des caractéristiques suivantes :

-     la vitesse angulaire est mesurée autour d'un axe parallèle au plan d'avancement du véhicule ferroviaire et perpendiculaire à la direction d'avancement du véhicule ferroviaire, le biais de la vitesse angulaire mesurée est déterminé lorsque la pente de la voie sur laquelle le véhicule ferroviaire circule est constante et la vitesse angulaire évaluée est calculée à partir du biais précédemment déterminé lorsque la pente de la voie sur laquelle circule le véhicule ferroviaire est variable ;
-     la vitesse angulaire est mesurée autour d'un axe perpendiculaire au plan d'avancement du véhicule ferroviaire, le biais de la vitesse angulaire mesurée est déterminé lorsque la voie sur laquelle le véhicule ferroviaire circule est rectiligne ou de courbure constante, et la vitesse angulaire évaluée est calculée à partir du biais précédemment déterminé lorsque la voie sur laquelle circule le véhicule ferroviaire est de courbure variable ;
-     la vitesse angulaire est mesurée autour d'un axe parallèle à la direction d'avancement du véhicule ferroviaire, le biais de la vitesse angulaire mesurée est déterminé lorsque la voie sur laquelle le véhicule ferroviaire circule est à devers constant, et la vitesse angulaire évaluée est calculée à partir du biais précédemment déterminé lorsque la voie sur laquelle circule le véhicule ferroviaire est de devers variable ;
-     le procédé comporte en outre une phase d'évaluation de l'accélération comprenant une étape de mesure de l'accélération instantanée du véhicule ferroviaire suivant la direction d'avancement du véhicule par un capteur d'accélération équipant le véhicule ferroviaire, et en ce qu'il comporte :

-     une étape de détermination du biais de l'accélération mesurée, le biais d'accélération étant pris égal à la valeur de l'accélération instantanée mesurée lorsque le véhicule ferroviaire est à l'arrêt ; et

- une étape de calcul de l'accélération évaluée, par soustraction, à l'accélération instantanée mesurée, du biais d'accélération précédemment déterminé ;

- le procédé comporte en outre une phase d'évaluation de l'accélération comprenant une étape de mesure de l'accélération instantanée du véhicule ferroviaire suivant la direction d'avancement du véhicule par un capteur d'accélération équipant le véhicule ferroviaire, il comporte une étape de mesure de l'accélération du véhicule ferroviaire par un capteur de roue propre à déterminer la vitesse de rotation de la roue, et il comporte :

  - une étape de détermination du biais de l'accélération mesurée, le biais d'accélération étant pris égal à la différence d'accélération moyenne mesurée par le capteur de roue et le capteur d'accélération sur une période de temps prédéterminée pendant laquelle la roue ne glisse pas par rapport au rail et,
  - une étape de calcul de l'accélération évaluée, par soustraction, à l'accélération instantanée mesurée, du biais d'accélération précédemment déterminé ;

- l'étape de détermination du biais d'accélération n'est effectuée que si la période de temps, pendant laquelle la roue ne glisse pas par rapport au rail, a une durée supérieure à 1 seconde ;

L'invention a en outre pour objet un procédé d'évaluation de l'accélération, la vitesse ou la position d'un véhicule ferroviaire, caractérisé en ce qu'il comporte :

- l'évaluation de la vitesse angulaire du véhicule ferroviaire autour de trois directions perpendiculaires les unes aux autres, par mise en oeuvre d'un procédé tel que défini ci-dessus,
- l'évaluation de l'accélération du véhicule suivant sa direction d'avancement par mise en oeuvre d'un procédé tel que défini ci-dessus,

et il comporte une étape d'estimation de l'accélération, de la vitesse ou la position du véhicule ferroviaire, par correction de l'accélération évaluée à partir des vitesses angulaires évaluées et éventuelle intégration.

L'invention concerne enfin une installation d'évaluation de la vitesse angulaire d'un véhicule ferroviaire circulant sur une voie, le véhicule comporte au moins un capteur de vitesse angulaire, propre à mesurer une vitesse angulaire instantanée, caractérisée en qu'elle comporte :

- des moyens de détermination du biais de la vitesse angulaire mesurée autour d'au moins un axe, le biais de vitesse étant pris égal à la valeur de la vitesse angulaire mesurée autour de cet axe lorsque ladite vitesse angulaire mesurée est sensiblement constante pendant une durée prédéterminée ; et
- des moyens de calcul de la vitesse angulaire évaluée, déterminée par soustraction, à la vitesse angulaire mesurée, du biais de vitesse précédemment déterminé.

L'invention a également pour objet un véhicule ferroviaire comportant une installation telle que définie ci-dessus.

L'invention sera mieux comprise à la lecture de la description qui va suivre, donnée uniquement à titre d'exemple et faite en se référant aux dessins sur lesquels :

- la figure 1 est une vue schématique de l'installation d'évaluation de la vitesse mise en oeuvre dans un véhicule selon l'invention ;
- la figure 2 est un organigramme de l'algorithme mis en oeuvre pour la correction de l'une des vitesses mesurées ;
- la figure 3 est une vue schématique de côté de l'élévation d'une voie de circulation d'un véhicule ferroviaire ;
- la figure 4 est une vue de dessus d'une voie de circulation d'un véhicule ferroviaire ;
- la figure 5 est un organigramme de l'algorithme mis en oeuvre pour la correction de l'accélération mesurée ; et
- la figure 6 est une représentation des états de l'installation selon l'invention.

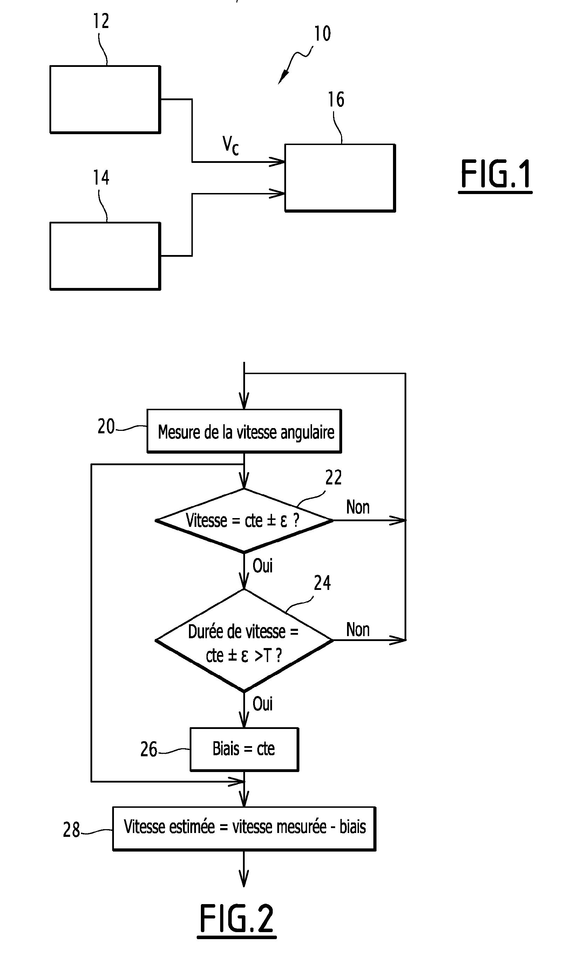

L'installation illustrée sur la figure 1 équipe un véhicule ferroviaire, notamment par exemple une locomotive d'un convoi de voitures de passagers ou de wagons de marchandise. Elle est propre à calculer la vitesse et la distance parcourue du véhicule.

Le véhicule sur lequel est installée l'installation 10 est équipé sur au moins une roue d'un capteur de roue 12 constitué d'une roue munie d'encoches qui est solidaire de la roue et d'un capteur optique qui est fixé à la structure du véhicule. Le capteur optique est propre à détecter le passage des encoches lors de la rotation de la roue. Un tel capteur est connu en soi et il ne sera pas décrit plus avant.

Le capteur de roue fournit la vitesse de rotation de la roue de laquelle on calcule une vitesse instantanée mesurée notée $V_c$ en multipliant cette vitesse de rotation par le rayon de la roue. Il fournit en outre une accélération de la roue.

En outre, le véhicule comporte une centrale inertielle 14 formée d'au moins un accéléromètre et de trois gyroscopes. De préférence, cette centrale inertielle repose sur la technologie MEMS.

Avantageusement, la centrale inertielle comporte trois accéléromètres, propre chacun à déterminer l'accélération suivant trois axes perpendiculaires les uns aux autres. Ainsi, un premier accéléromètre est propre à déterminer l'accélération suivant l'axe X du véhicule, constitué de la direction d'avancement du véhicule suivant la voie. Un autre capteur est disposé suivant un axe généralement horizontal Y transversal au véhicule et un troisième suivant un axe généralement vertical Z transversal également au véhicule.

En outre, les trois gyroscopes sont propres à déterminer des vitesses angulaires mesurées $\dot{\theta}_x, \dot{\theta}_y, \dot{\theta}_z$ du véhicule respectivement autour des axes X, Y et Z précédemment définis.

Le capteur de roue 12 et la centrale inertielle 14 sont tous deux reliés à une unité centrale de traitement d'information 16 pour un calcul odométrique de la vitesse et de la distance parcourue par le véhicule à partir des informations reçues de la centrale inertielle corrigées des informations reçues du capteur de roue.

Les informations de distance parcourue par le véhicule, ainsi que les informations de vitesse sont calculées seulement à partir des informations mesurées issues de la centrale inertielle, les informations mesurées issues du capteur de roue ne servant qu'à corriger les éventuels biais dans les mesures issues de la centrale inertielle.

Comme connu en soi, l'unité centrale 16 assure le calcul de la vitesse du véhicule et de la distance parcourue par une intégration par rapport au temps respectivement simple et double de l'accélération mesurée suivant l'axe X, en tenant compte de l'inclinaison du véhicule, autour des axes X, Y et Z et des autres informations fournies par la centrale inertielle.

Les modes de calcul de la vitesse et de la distance parcourue du véhicule par intégration des accélération et vitesse du véhicule sont détaillés ci-dessous.

En utilisant la terminologie suivante :

$D_T$ = distance couverte par le véhicule ferroviaire
$S_T$ = vitesse longitudinale du véhicule ferroviaire
$A_T$ = accélération longitudinale du véhicule ferroviaire

Ces quantités s'expriment de la manière suivante :

$$S_T(t) = \int_o^t A_T(t)*dt + S_T(0)$$

$$D_T(t) = \int_o^t S_T(t)*dt + D_T(0)$$

Si l'accélération inertielle mesurée par le capteur d'accélération placé suivant l'axe X est $\ddot{x}(t)$, grade est l'inclinaison ou gradient de la voie, et g est l'attraction terrestre,
tant que grade est faible, on a : $A_T(t) = \ddot{x}(t)*g*\sin(grade)$.

Si la vitesse de rotation autour de l'axe Y mesurée par la centrale inertielle est $\dot{\theta}_y(t)$, cant est la « surélévation » de la voie, $\dot{\theta}_z(t)$ et $\dot{\theta}_x(t)$ sont respectivement les vitesses de rotation mesurée autour des axes Z et X alors on a

$$grade = \int [\dot{\theta}_y(t) - \dot{\theta}_z(t)*\sin(cant)]*dt$$

où cant = $\int \dot{\theta}_x(t)*dt$
et ainsi

$$A_t(t) = \ddot{x}_m(t) - g*\sin\left(\int[\dot{\theta}_y(t) - \dot{\theta}_z(t)*\sin\left(\int \dot{\theta}_x(t)*dt\right)]*dt\right)$$

En conséquence, les valeurs de l'accélération, de la vitesse et de la position du véhicule ferroviaire peuvent être évaluées à partir des seules valeurs

$$\ddot{x}_m(t)$$

$$\dot{\theta}_y(t)$$

$$\dot{\theta}_z(t)$$

$$\dot{\theta}_x(t)$$

et de conditions initiales connues, notamment concernant la vitesse $S_T(0)$.

Les autres informations, apportées notamment sur l'inclinaison du véhicule ferroviaire sont fournies par les capteurs de vitesse angulaire. Ces informations de vitesse angulaire sont intégrées par rapport au temps par l'unité de traitement odométrique 16 pour déterminer la position du véhicule.

Dans la pratique, chaque valeur mesurée par la centrale inertielle 14 est entachée d'un biais.

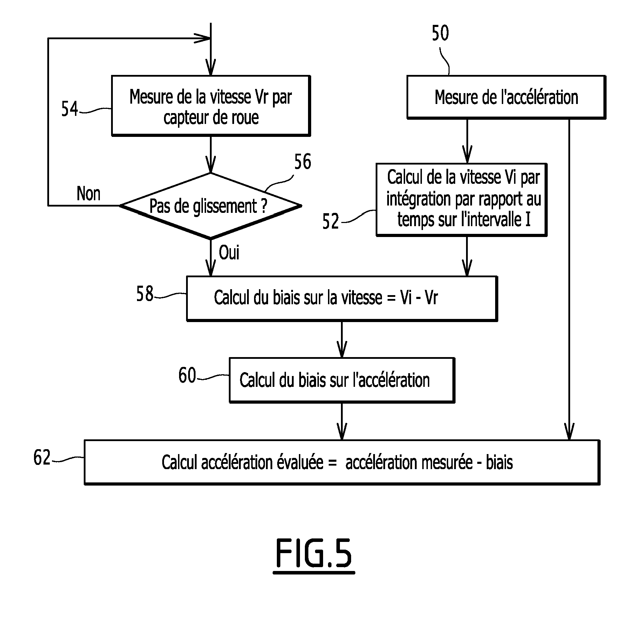

Selon l'invention, le procédé mis en oeuvre par l'unité de traitement 16 assure une correction de chacun des biais des mesures effectuées par les capteurs de vitesse angulaire de la centrale inertielle par mise en oeuvre d'un algorithme tel qu'illustré sur la figure 2, et de l'accélération mesurée $\ddot{x}_m(t)$ suivant l'algorithme de la figure 5 pour fournir des valeurs de vitesse angulaire et d'accélération estimées qui sont égales à la valeur mesurée correspondante duquel le biais précédemment calculé a été soustrait.

Ainsi, pour une mesure de vitesse angulaire particulière autour d'un axe, l'algorithme de la figure 2 est mis en oeuvre en boucle.

A l'étape 20, la vitesse angulaire est mesurée.

A l'étape 22, un test est effectué pour déterminer si la vitesse angulaire mesurée est sensiblement égale à la vitesse précédemment mesurée, c'est-à-dire avec une différence inférieure à une valeur $\varepsilon$ très faible. Si tel est le cas, un second test est effectué à l'étape 24 pour déterminer si la vitesse angulaire est sensiblement constante sur un intervalle de temps de durée supérieure à une durée T prédéterminée.

Si tel est le cas, le biais est pris égal à l'étape 26 à la valeur constante de la vitesse constatée sur l'intervalle prédéterminé T. De préférence, l'intervalle T a une durée comprise entre 5 et 30 secondes.

A l'étape 28, la vitesse angulaire estimée est calculée comme étant égale à la vitesse angulaire mesurée corrigée du dernier biais calculé à l'étape 26.

Ainsi, pour chaque vitesse angulaire mesurée à l'étape 20, une vitesse estimée est déterminée à l'étape 28, à partir du dernier biais calculé à l'issue d'une période prédéterminée T au cours de laquelle la vitesse angulaire est restée constante.

Si les tests des étapes 22 et 24 sont négatifs, l'étape 20 est à nouveau mise en oeuvre, pour permettre de fournir en permanence une vitesse angulaire estimée.

La vitesse angulaire estimée ainsi calculée fournit une information très satisfaisante de la vitesse angulaire réelle.

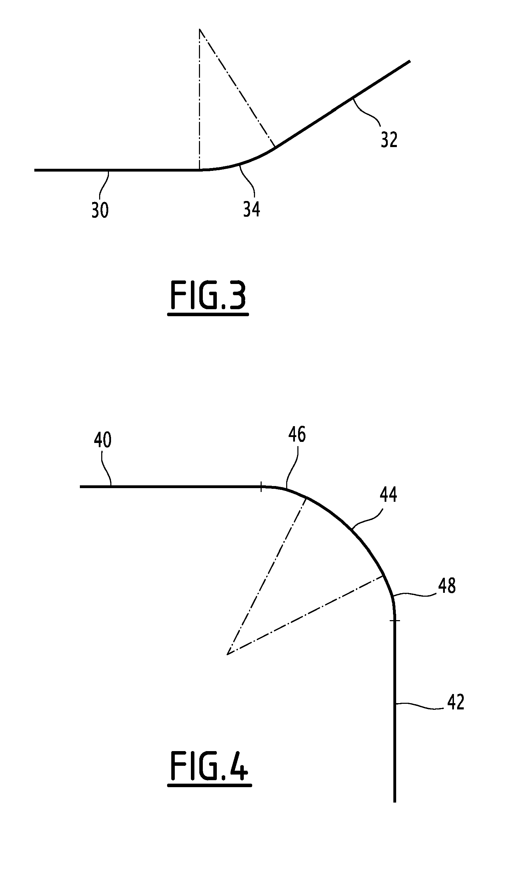

En effet, si l'on considère la vitesse angulaire autour de l'axe Y, on comprend que tant que le véhicule circule sur une voie horizontale ou sur un tronçon de voie de pente constante, comme les tronçons 30 et 32 illustrés sur la figure 3, la vitesse angulaire autour de l'axe Y est nulle. Si la vitesse estimée sur ses tronçons est non nulle, la vitesse alors mesurée correspond au biais qui doit être corrigé.

Lors d'un tronçon de liaison 34, couramment constitué par un segment de cercle, la vitesse estimée est prise égale à la vitesse mesurée corrigée par le biais déterminé pendant le tronçon horizontal de pente constante précédent et une vitesse angulaire estimée correcte est alors ainsi obtenue. Aucune correction du biais n'est effectuée pendant le franchissement du segment courbe 34.

De même, et comme illustré sur la figure 4, lors de la circulation d'un véhicule ferroviaire sur un tronçon rectiligne vu de dessus, comme les tronçons 40 et 42, la voie n'ayant aucun devers, et étant rectiligne, les vitesses angulaires autour des axes Y et Z doivent être nulles. Si tel n'est pas le cas, une correction du biais est effectuée suivant l'algorithme de la figure 2, en soustrayant à la vitesse mesurée la valeur constante de la vitesse alors mesurée.

De même, pendant la circulation sur un tronçon vu de dessus constitué d'un tronçon de cercle 44, le devers appliqué à la voie et donc au véhicule est constant par construction de la voie de sorte que la vitesse angulaire autour de l'axe X est normalement nulle. Si tel n'est pas le cas, une correction est effectuée suivant l'algorithme de la figure 2.

Lors du franchissement d'un tronçon de rayon de courbure non constant vu de dessus, tel qu'un tronçon de clothoide 46, 48, couramment utilisé pour relier un tronçon en forme de cercle à un tronçon rectiligne, aucun calcul de biais n'est effectué pour la vitesse de rotation autour des axes X, Y et Z et la correction s'effectue des vitesses angulaires avec le dernier biais calculé.

Le biais sur l'accélération est calculé et pris en compte pour mesurer et calculer une accélération estimée suivant l'une des méthodes suivantes.

La première méthode consiste à déterminer quand le véhicule ferroviaire est à l'arrêt et à mesurer alors l'accélération fournie par le capteur. Le biais est alors pris égal à l'accélération mesurée puisque à l'arrêt, l'accélération devrait être nulle.

Pour la suite, alors que le véhicule est en mouvement, l'accélération mesurée est prise égale à l'accélération mesurée diminuée du dernier biais ainsi calculé. Dans ce mode de réalisation, le capteur de roue est inutile.

Suivant un autre mode de réalisation, le biais sur l'accélération mesurée est déterminé par mise en oeuvre de l'algorithme de la figure 5.

A l'étape 50, l'accélération est mesurée en continue. A l'étape 52, on calcule la vitesse à partir de l'intégration au cours du temps des valeurs d'accélération mesurées à l'étape 50.

Parallèlement, à l'étape 54, une mesure de la vitesse des roues du véhicule, à partir du capteur de roue est effectuée. Un test est conduit à l'étape 56 pour déterminer si la roue glisse par rapport au rail ou si l'adhérence est satisfaisante. On détermine simultanément un intervalle de temps I d'absence de glissement pendant lequel la roue ne glisse pas.

La détermination de l'éventuel glissement est effectuée par toutes méthodes connues adaptées.

En l'absence de glissement détecté sur un intervalle I d'une durée supérieure à une seconde, un calcul du biais sur la vitesse est effectué à l'étape 58 par différence entre la vitesse calculée à l'étape 52 et celle mesurée à l'étape 54.

A l'étape 60, le biais sur l'accélération est calculé par différence entre l'accélération de la roue et l'accélération mesurée, moyennées sur l'intervalle I ou inférieur à I mais supérieur à une seconde.

Enfin, un calcul de l'accélération estimée est effectué à l'étape 62 pour chaque accélération mesurée à l'étape 50 par la différence entre l'accélération mesurée et le dernier biais calculé à l'étape 60.

En l'absence d'un intervalle long de plus de 1 seconde sans glissement, aucun nouveau biais sur l'accélération n'est calculé.

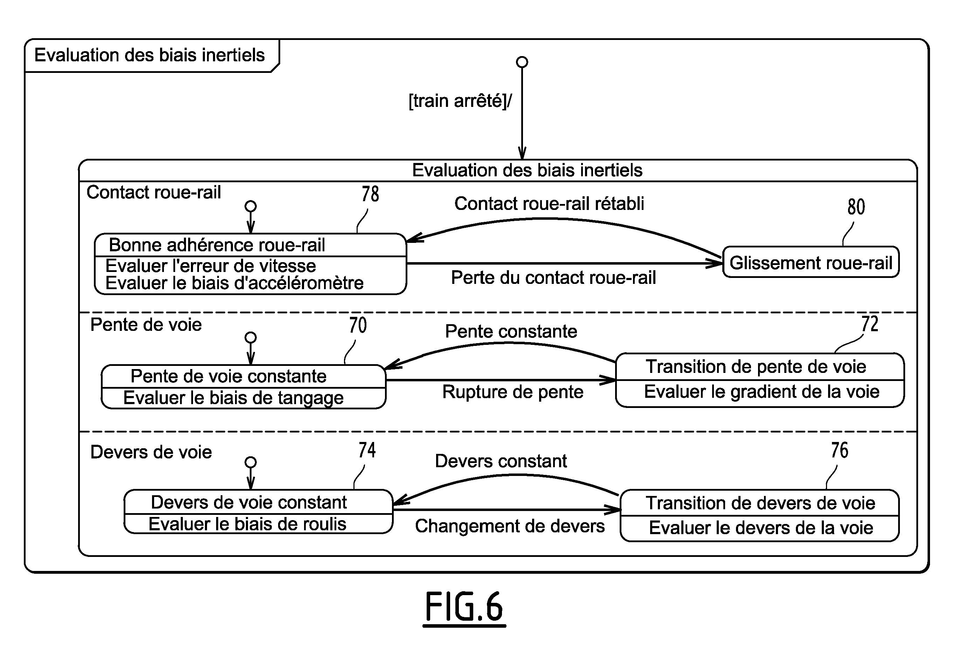

La situation peut ainsi être résumée sur le diagramme d'état illustré sur la figure 6.

Sur ce diagramme, on constate que concernant la pente de la voie, c'est-à-dire la prise en compte de la vitesse angulaire autour de l'axe Y, une évaluation du biais de la vitesse angulaire autour de l'axe Y (biais de tangage) est effectuée à l'état 70 lorsque la pente de la voie est constante. Lors des transitions de pente de voie, illustrées par l'état 72, une évaluation du gradient de la voie, c'est-à-dire de la vitesse angulaire autour de l'axe Y est effectuée. Les transitions entre ces deux états s'opèrent en fonction que la pente soit constante ou qu'il y ait une rupture de pente. Ces deux états transitoires sont détectés par le fait que la vitesse angulaire autour de l'axe Y soit inférieure à un seuil proche de 0.

De même, pour tenir compte de la déformation de la voie dans le plan horizontal, ou le dévers imposé à la voie, l'évaluation du biais de la vitesse angulaire autour de l'axe X est effectuée à l'état 74, lorsque le dévers de voie est constant.

En revanche, à l'état 76, lors d'une transition de dévers de voie, le biais de la vitesse angulaire autour de l'axe X n'est plus estimé mais le dévers de voie est alors évalué.

Les transitions entre les états 74 et 76 s'effectuent suivant que le dévers devienne contant ou variable, c'est-à-dire que la vitesse angulaire autour de l'axe X soit nulle ou différente de zéro.

Concernant le biais sur l'accélération, à l'état 78, lors d'une bonne adhérence détectée entre le rail et la roue, le biais d'accélération est évalué suivant l'algorithme de la figure 5 de même que le biais de vitesse.

En revanche, lors d'un état de glissement rail/roue 80, le biais de vitesse et le biais d'accélération ne sont pas estimés et seule l'accélération est evaluée à partir des biais précédemment calculés et des mesures réalisées.

Les transitions entre les deux états s'effectuent lors de l'apparition ou la disparition d'un glissement entre la roue et le rail.

## Revendications

1. Procédé d'évaluation de la vitesse angulaire d'un véhicule ferroviaire circulant sur une voie, le véhicule comportant une centrale inertielle (14) comportant au moins un capteur de vitesse angulaire, le procédé comportant une étape de mesure d'une vitesse angulaire instantanée ($\dot{\theta}_x(t)$, $\dot{\theta}_y(t)$, $\dot{\theta}_z(t)$) fournie par le capteur, **caractérisé en ce qu'**il comporte :

   - une étape de détermination du biais de la vitesse angulaire mesurée autour d'au moins un axe, le biais de vitesse étant pris égal à la valeur de la vitesse angulaire mesurée autour de cet axe lorsque ladite vitesse angulaire mesurée est sensiblement constante pendant une durée prédéterminée (T) ; et

- une étape de calcul de la vitesse angulaire évaluée, par soustraction, à la vitesse angulaire mesurée, du biais de vitesse précédemment déterminé.

2. Procédé d'évaluation de la vitesse angulaire selon la revendication 1, **caractérisé en ce que** la vitesse angulaire ($\dot{\theta}_y$ (t)) est mesurée autour d'un axe (Y) parallèle au plan d'avancement du véhicule ferroviaire et perpendiculaire à la direction d'avancement du véhicule ferroviaire, **en ce que** le biais de la vitesse angulaire mesurée est déterminé lorsque la pente de la voie sur laquelle le véhicule ferroviaire circule est constante et **en ce que** la vitesse angulaire évaluée est calculée à partir du biais précédemment déterminé lorsque la pente de la voie sur laquelle circule le véhicule ferroviaire est variable.

3. Procédé d'évaluation de la vitesse angulaire selon la revendication 1 ou 2, **caractérisé en ce que** la vitesse angulaire ($\dot{\theta}_z$(t)) est mesurée autour d'un axe (Z) perpendiculaire au plan d'avancement du véhicule ferroviaire, **en ce que** le biais de la vitesse angulaire mesurée est déterminé lorsque la voie sur laquelle le véhicule ferroviaire circule est rectiligne ou de courbure constante, et **en ce que** la vitesse angulaire évaluée est calculée à partir du biais précédemment déterminé lorsque la voie sur laquelle circule le véhicule ferroviaire est de courbure variable.

4. Procédé d'évaluation de la vitesse angulaire selon la revendication 1, 2 ou 3, **caractérisé en ce que** la vitesse angulaire ($\dot{\theta}_x$(t)) est mesurée autour d'un axe (X) parallèle à la direction d'avancement du véhicule ferroviaire, **en ce que** le biais de la vitesse angulaire mesurée est déterminé lorsque la voie sur laquelle le véhicule ferroviaire circule est à devers constant, et **en ce que** la vitesse angulaire évaluée est calculée à partir du biais précédemment déterminé lorsque la voie sur laquelle circule le véhicule ferroviaire est de devers variable.

5. Procédé d'évaluation de la vitesse angulaire selon l'une quelconque des revendications précédentes, **caractérisé en ce qu'**il comporte en outre une phase d'évaluation de l'accélération comprenant une étape de mesure de l'accélération instantanée ($\ddot{x}_m$ (t)) du véhicule ferroviaire suivant la direction d'avancement du véhicule par un capteur d'accélération (14) équipant le véhicule ferroviaire, et **en ce qu'**il comporte :

   - une étape de détermination du biais de l'accélération mesurée, le biais d'accélération étant pris égal à la valeur de l'accélération instantanée mesurée lorsque le véhicule ferroviaire est à l'arrêt ; et
   - une étape de calcul de l'accélération évaluée, par soustraction, à l'accélération instantanée mesurée, du biais d'accélération précédemment déterminé.

6. Procédé selon l'une quelconque des revendications 1 à 4, **caractérisé en ce qu'**il comporte en outre une phase d'évaluation de l'accélération comprenant une étape de mesure de l'accélération instantanée ($\ddot{x}_m$ (t)) du véhicule ferroviaire suivant la direction d'avancement du véhicule par un capteur d'accélération (14) équipant le véhicule ferroviaire, **en ce qu'**il comporte une étape de mesure de l'accélération du véhicule ferroviaire par un capteur de roue (12) propre à déterminer la vitesse de rotation de la roue, et **en ce qu'**il comporte :

   - une étape de détermination du biais de l'accélération mesurée, le biais d'accélération étant pris égal à la différence d'accélération moyenne mesuré par le capteur de roue (12) et le capteur d'accélération sur une période de temps prédéterminée (I) pendant laquelle la roue ne glisse pas par rapport au rail et,
   - une étape de calcul de l'accélération évaluée, par soustraction, à l'accélération instantanée mesurée, du biais d'accélération précédemment déterminé.

7. Procédé selon la revendication 6, **caractérisé en ce que** l'étape de détermination du biais d'accélération n'est effectuée que si la période de temps (I), pendant laquelle la roue ne glisse pas par rapport au rail, a une durée supérieure à 1 seconde.

8. Procédé d'évaluation de l'accélération, la vitesse ou la position d'un véhicule ferroviaire, **caractérisé en ce qu'**il comporte :

   - l'évaluation de la vitesse angulaire du véhicule ferroviaire autour de trois directions perpendiculaires les unes aux autres, par mise en oeuvre d'un procédé selon l'une quelconque des revendications 1 à 4,
   - l'évaluation de l'accélération du véhicule suivant sa direction d'avancement par mise en oeuvre d'un procédé selon la revendication 5, 6 ou 7,

   et **en ce qu'**il comporte une étape d'estimation de l'accélération, de la vitesse ou la position du véhicule ferroviaire, par correction de l'accélération évaluée à partir des vitesses angulaires évaluées et éventuelle intégration.

9. Installation d'évaluation de la vitesse angulaire d'un véhicule ferroviaire circulant sur une voie, le véhicule comportant au moins un capteur de vitesse angulaire, propre à mesurer une vitesse angulaire instantanée, **caractérisée en ce qu'**elle comporte :

- des moyens (16) de détermination du biais de la vitesse angulaire mesurée autour d'au moins un axe, le biais de vitesse étant pris égal à la valeur de la vitesse angulaire mesurée autour de cet axe lorsque ladite vitesse angulaire mesurée est sensiblement constante pendant une durée prédéterminée (T); et
- des moyens (16) de calcul de la vitesse angulaire évaluée, déterminée par soustraction, à la vitesse angulaire mesurée, du biais de vitesse précédemment déterminé.

10. Véhicule ferroviaire comportant une installation selon la revendication 9.

**Patentansprüche**

1. Verfahren zur Auswertung der Winkelgeschwindigkeit eines Schienenfahrzeuges, welches auf einem Gleis zirkuliert, wobei das Fahrzeug eine Inertialzentrale (14) umfasst, welche zumindest ein Winkelgeschwindigkeitsmessgerät umfasst, wobei das Verfahren einen Schritt des Messens einer momentanen Winkelgeschwindigkeit($\dot{\theta}_x(t)$, $\dot{\theta}_y(t)$, $\dot{\theta}_z(t)$), welche von dem Messgerät geliefert wird, umfasst, **dadurch gekennzeichnet, dass** es umfasst:

- einen Schritt des Bestimmens des Bias, einer Winkelgeschwindigkeit, welche um mindestens eine Achse gemessen wird, wobei der Bias der Geschwindigkeit gleichgesetzt wird mit dem Wert der Winkelgeschwindigkeit, die um diese Achse gemessen wird, wenn diese gemessene Winkelgeschwindigkeit in etwa konstant während einer vorbestimmten Dauer (T) ist; und
- einen Schritt des Berechnens der ausgewerteten Winkelgeschwindigkeit durch Subtraktion des vorher bestimmten Bias der Geschwindigkeit von der gemessenen Winkelgeschwindigkeit.

2. Verfahren zur Auswertung der Winkelgeschwindigkeit nach Anspruch 1, **dadurch gekennzeichnet, dass** die Winkelgeschwindigkeit $\dot{\theta}_y(t)$, um eine Achse (Y) parallel zu der Fortbewegung des Schienenfahrzeugs und senkrecht zu der Fortbewegungsrichtung des Schienenfahrzeuges gemessen wird, dass der Bias der gemessenen Winkelgeschwindigkeit bestimmt wird, wenn die Steigung des Gleises, auf welchem das Schienenfahrzeug zirkuliert, konstant ist und dass die ausgewertete Winkelgeschwindigkeit ausgehend von dem Bias, der zuvor bestimmt wurde, berechnet wird wenn die Steigung des Gleises, auf dem das Schienenfahrzeug zirkuliert, variabel ist.

3. Verfahren zur Auswertung der Winkelgeschwindigkeit nach Anspruch 1 oder 2, **dadurch gekennzeichnet, dass** die Winkelgeschwindigkeit $\dot{\theta}_z(t)$, um eine Achse (Z) senkrecht zu der Fortbewegung des Schienenfahrzeuges gemessen wird, dass der Bias der gemessenen Winkelgeschwindigkeit bestimmt wird, wenn das Gleis, auf dem das Schienenfahrzeug fährt, geradlinig ist oder eine konstante Krümmung aufweist und dass die ausgewertete Winkelgeschwindigkeit ausgehend von dem zuvor bestimmten Bias berechnet wird ,wenn das Gleis, auf dem das Schienenfahrzeug zirkuliert, eine variable Krümmung aufweist.

4. Verfahren zur Auswertung der Winkelgeschwindigkeit nach Anspruch 1, 2 oder 3, **dadurch gekennzeichnet, dass** die Winkelgeschwindigkeit $\dot{\theta}_x(t)$ um eine Achse (X) parallel zu der Fortbewegungsrichtung des Schienenfahrzeugs gemessen wird, dass der Bias der gemessenen Winkelgeschwindigkeit bestimmt wird, wenn das Gleis, auf dem das Schienenfahrzeug zirkuliert, bezüglich der Querneigung konstant ist und dass die ausgewertete Winkelgeschwindigkeit ausgehend von dem zuvor bestimmten Bias berechnet wird, wenn das Gleis, auf dem das Schienenfahrzeug umläuft, bezüglich der Querneigung variabel ist.

5. Verfahren zur Auswertung der Winkelgeschwindigkeit nach einem der vorangegangenen Ansprüche, **dadurch gekennzeichnet, dass** es darüber hinaus eine Phase der Auswertung der Beschleunigung aufweist, umfassend einen Schritt des Messens der momentanen Beschleunigung ($\ddot{x}_m(t)$)des Schienenfahrzeugs entlang der Fortbewegungsrichtung des Fahrzeuges durch ein Beschleunigungsmessgerät (14), mit welchem das Schienenfahrzeug ausstattet ist, und umfassend:

- einen Schritt zur Bestimmung der Bias der gemessenen Beschleunigung, wobei der Bias der Beschleunigung gleichgesetzt wird mit dem momentanen Beschleunigungswert, der gemessen wird, wenn das Schienenfahrzeug stillsteht; und
- einen Schritt zur Berechnung der ausgewerteten Beschleunigung durch Subtraktion des zuvor bestimmten Bias der Beschleunigung von der gemessenen momentanen Beschleunigung.

6. Verfahren nach einem der Ansprüche 1-4, **dadurch gekennzeichnet, dass** es darüber hinaus eine Phase der Auswertung der Beschleunigung aufweist, umfassend einen Schritt des Messens der momentanen Beschleunigung ($\ddot{x}_m(t)$) des Schienenfahrzeugs, entlang der Fortbewegungsrichtung des Fahrzeugs, durch ein Beschleunigungsmessgerät (14), mit welchem das Schienenfahrzeug ausstattet ist, umfassend einen Schritt des Messens der Beschleunigung des Schienenfahrzeugs durch ein Messrad (12), welches geeignet ist zum Bestimmen der Rotationsgeschwindigkeit des Rades und umfassend:

- einen Schritt zur Bestimmung des Bias der gemessenen Beschleunigung, wobei der Bias der Beschleunigung gleichgesetzt wird mit der gemessenen mittleren Beschleunigungsdifferenz, welche durch das Messrad (12) und das Beschleunigungsmessgerät über einen vorbestimmten Zeitraum (I) gemessen wird, während dem das Rad bezüglich der Schiene keinen Schlupf hat; und
- einen Schritt zur Berechnung der ausgewerteten Beschleunigung durch Subtraktion des zuvor bestimmten Bias der Beschleunigung von der gemessenen momentanen Beschleunigung.

7. Verfahren nach Anspruch 6, **dadurch gekennzeichnet, dass** der Schritt zur Bestimmung des Bias der Beschleunigung nur ausgeführt wird, wenn der Zeitraum (I), während dem das Rad bezüglich der Schiene keinen Schlupf hat, länger als 1 Sekunde dauert.

8. Verfahren zur Auswertung der Beschleunigung, der Geschwindigkeit oder der Position eines Schienenfahrzeugs, **dadurch gekennzeichnet, dass** es umfasst:

- die Auswertung der Winkelgeschwindigkeit des Schienenfahrzeugs in drei Richtungen, welche senkrecht zueinander sind, durch Anwendung eines Verfahrens nach einem der Ansprüche 1 - 4;
- die Auswertung der Beschleunigung des Fahrzeugs nach seiner Fortbewegungsrichtung durch Anwendung eines Verfahrens nach Anspruch 5, 6 oder 7;

und dass es einen Schritt der Abschätzung der Beschleunigung, der Geschwindigkeit oder der Position des Schienenfahrzeugs umfasst, durch Korrektur der ausgewerteten Beschleunigung ausgehend von den ausgewerteten Winkelgeschwindigkeiten und etwaiger Integration.

9. Einrichtung zur Auswertung der Winkelgeschwindigkeit eines Schienenfahrzeugs, welches auf einem Gleis umläuft, wobei das Fahrzeug zumindest ein Gerät zur Messung der Winkelgeschwindigkeit umfasst, geeignet zum Messen der momentanen Winkelgeschwindigkeit, **dadurch gekennzeichnet, dass** es umfasst:

- Mittel (16) zur Bestimmung des Bias der gemessenen Winkelgeschwindigkeit um zumindest eine Achse, wobei der Bias der Geschwindigkeit gleichgesetzt wird mit dem Wert der Winkelgeschwindigkeit, welcher um diese Achse gemessen wird, wenn diese gemessene Winkelgeschwindigkeit während eines vorbestimmten Zeitraums (T) deutlich konstant ist; und
- Mittel (16) zur Berechnung der ausgewerteten Winkelgeschwindigkeit, welche durch Subtraktion des zuvor bestimmten Bias der Geschwindigkeit von der gemessenen Winkelgeschwindigkeit bestimmt wird.

10. Schienenfahrzeug umfassend eine Einrichtung nach Anspruch 9.

## Claims

1. A method for evaluating the angular velocity of a railway vehicle circulating on a track, the vehicle including an inertial unit (14) including at least one angular velocity sensor, the method including a step for measuring an instantaneous angular velocity ($\dot{\theta}_x(t)$, $\dot{\theta}_y(t)$, $\dot{\theta}_z(t)$) provided by the sensor, **characterized in that** it includes:

- a step for determining the bias of the angular velocity measured around at least one axis, the velocity bias being taken equal to the value of the angular velocity measured around this axis when said measured angular velocity is substantially constant for a predetermined period (T); and
- a step for calculating the evaluated angular velocity, by subtraction, from the measured angular velocity, of the previously determined velocity bias.

2. The method for evaluating the angular velocity according to claim 1, **characterized in that** the angular velocity ($\dot{\theta}_y$(t)) is measured around an axis (Y) parallel to the forward movement plane of the railway vehicle and perpendicular to the forward movement direction of the railway vehicle, **in that** the bias of the measured angular velocity is determined when the slope of the track on which circulates the railway vehicle is constant and **in that** the evaluated angular velocity is calculated from the previously determined bias when the slope of the track on which circulates the railway vehicle is variable.

3. The method for evaluating the angular velocity according to claim 1 or 2, **characterized in that** the angular velocity ($\dot{\theta}_z$(t)) is measured around an axis (Z) perpendicular to the forward movement plane of the railway vehicle, **in that** the bias of the measured angular velocity is determined when the track on which circulates the railway vehicle is rectilinear or with constant curvature, and **in that** the evaluated angular velocity is calculated from the previously determined bias when the track on which circulates the railway vehicle is of variable curvature.

4. The method for evaluating the angular velocity according to claim 1, 2 or 3, **characterized in that** the angular velocity ($\dot{\theta}_x$(t)) is measured around an axis (X) parallel to the forward movement direction of the railway vehicle, **in that** the bias of the measured angular velocity is determined when the track on which circulates the railway vehicle is with constant banking, and **in that** the evaluated angular velocity is calculated from the previously determined bias when the track on which circulates the railway vehicle is of variable banking.

5. The method for evaluating the angular velocity according to any of the preceding claims, **characterized in that** it further includes a phase for evaluating the acceleration comprising a step for measuring the instantaneous acceleration ($\ddot{x}_m$(t)) of the railway vehicle along the forward movement direction of the vehicle with an acceleration sensor (14) with which the railway vehicle is equipped, and **in that** it includes:

   - a step for determining the bias of the measured acceleration, the acceleration bias being taken equal to the value of the instantaneous acceleration measured when the railway vehicle is at a standstill; and
   - a step for calculating the evaluated acceleration, by subtraction, from the measured instantaneous acceleration, of the previously determined acceleration bias.

6. The method according to any of claims 1 to 4, **characterized in that** it further includes a phase for evaluating the acceleration comprising a step for measuring the instantaneous acceleration ($\ddot{x}_m$(t)) of the railway vehicle along the forward movement direction of the vehicle with an acceleration sensor (14) with which the railway vehicle is equipped, **in that** it includes a step for measuring the acceleration of the railway vehicle with a wheel sensor (12) adapted for determining the rotation speed of the wheel,
   and **in that** it includes:

   - a step for determining the bias of the measured acceleration, the acceleration bias being taken as equal to the average acceleration difference measured with the wheel sensor (12) and the acceleration sensor over a predetermined time period (I) during which the wheel does not slip relatively to the rail, and
   - a step for calculating the evaluated acceleration, by subtracting, from the measured instantaneous acceleration, of the previously determined acceleration bias.

7. The method according to claim 6, **characterized in that** the step for determining the acceleration bias is only carried out if the period of time (I), during which the wheel does not slip relatively to the rail, has a duration of more than 1 second.

8. A method for evaluating the acceleration, the velocity or the position of a railway vehicle, **characterized in that** it includes:

   - evaluation of the angular velocity of the railway vehicle around three directions perpendicular to each other, by applying a method according to any of claims 1 to 4,
   - evaluation of the acceleration of the vehicle along its forward motion direction by applying a method according to claim 5, 6 or 7,

and **in that** it includes a step for estimating the acceleration, the velocity or the position of the railway vehicle, by correcting the evaluated acceleration from evaluated angular velocities and optional integration.

9. A facility for evaluating the angular velocity of a railway vehicle circulating on a track, the vehicle including at least one angular velocity sensor, adapted for measuring an instantaneous angular velocity, **characterized in that** it includes:

- means (16) for determining the bias of the angular velocity measured around at least one axis, the velocity bias being taken equal to the value of the angular velocity measured around this axis when said measured angular velocity is substantially constant for a predetermined period (T); and
- means (16) for calculating the evaluated angular velocity, determined by subtraction, from the measured angular velocity, of the previously determined velocity bias.

10. A railway vehicle including a facility according to claim 9.

FIG.1

12

10

16

$V_C$

14

20 — Mesure de la vitesse angulaire

22

Vitesse = cte ± ε ? — Non

Oui

24

Durée de vitesse = cte ± ε >T ? — Non

Oui

26 — Biais = cte

28 — Vitesse estimée = vitesse mesurée - biais

FIG.2

EP 2 749 471 B1

FIG.3

FIG.4

```
                                                      50

54─  ┌─────────────────────┐          ┌─────────────────────┐
     │ Mesure de la vitesse Vr par │          │  Mesure de l'accélération  │
     │     capteur de roue     │          └─────────────────────┘
     └─────────────────────┘

                          56
              ╱───────────╲          ┌─────────────────────┐
    Non      ╱  Pas de      ╲        │  Calcul de la vitesse Vi par │
   ◀────────╱  glissement ?   ╲      52─ │ intégration par rapport au │
             ╲               ╱        │  temps sur l'intervalle I  │
              ╲─────────────╱        └─────────────────────┘
                   │ Oui

58─  ┌─────────────────────────────────┐
     │   Calcul du biais sur la vitesse = Vi - Vr   │
     └─────────────────────────────────┘

60─  ┌─────────────────────────────────┐
     │     Calcul du biais sur l'accélération    │
     └─────────────────────────────────┘

62─  ┌──────────────────────────────────────────────────┐
     │  Calcul accélération évaluée =  accélération mesurée - biais  │
     └──────────────────────────────────────────────────┘
```

## FIG.5

**Evaluation des biais inertiels**

[train arrêté]/

Evaluation des biais inertiels

Contact roue-rail          78

Contact roue-rail rétabli          80

Bonne adhérence roue-rail
Evaluer l'erreur de vitesse
Evaluer le biais d'accéléromètre

Glissement roue-rail

Perte du contact roue-rail

Pente de voie          70

Pente constante          72

Pente de voie constante
Evaluer le biais de tangage

Transition de pente de voie
Evaluer le gradient de la voie

Rupture de pente

Devers de voie          74

Devers constant          76

Devers de voie constant
Evaluer le biais de roulis

Transition de devers de voie
Evaluer le devers de la voie

Changement de devers

FIG.6

EP 2 749 471 B1

**EP 2 749 471 B1**

**Documents brevets cités dans la description**

- EP 1705095 A1